# EUROPÄISCHE PATENTANMELDUNG

(11) **EP 4 410 508 A1**
(43) Veröffentlichungstag der Anmeldung: **07.08.2024**
(21) Anmeldenummer: 24154800.7
(22) Anmeldetag: 30.01.2024
(51) Int. Cl.: B25J 21/00, B25J 15/00

(54) **HANDHABUNGSSYSTEM FÜR EINEN REINRAUM, EIN REINRAUM UND EIN VERFAHREN ZUM ABHEBEN VON DECKSCHICHTEN**

(30) Priorität: 01.02.2023 DE 102023102479
(71) Anmelder: Syntegon Technology GmbH, 71332 Waiblingen (DE)
(72) Erfinder: Ilgenfritz, Markus, 91555 Feuchtwangen (DE); Krauß, Ulrich, 74532 Ilshofen (DE); Nagler, Stefan, 73485 Unterschneidheim (DE); Stegmeier, Samuel, 74594 Kreßberg (DE)
(74) Vertreter: DREISS Patentanwälte PartG mbB

(57) **Zusammenfassung**

Es werden ein Handhabungssystem (10) für einen Reinraum (64), ein Reinraum (64) mit einem solchen Handhabungssystem (10) und ein Verfahren zum Abheben von Deckschichten (16) vorgeschlagen.

## Beschreibung

Die vorliegende Erfindung betrifft ein Handhabungssystem für einen Reinraum. Außerdem betrifft die vorliegende Erfindung einen Reinraum, in dem ein solches Handhabungssystem angeordnet ist. Weiterhin betrifft die vorliegende Erfindung ein Verfahren zum Abheben von Deckschichten.

In der pharmazeutischen Produktion werden Arzneimittel oder medizinische Wirkstoffe typischerweise in pharmazeutische Primärverpackungen abgefüllt. Vor der Abfüllung der Arzneimittel bzw. Wirkstoffe werden die Primärverpackungen als solche oder Primärverpackungsteile der Primärverpackungen typischerweise in wannenförmigen Transportbehältern gelagert. Ein Beispiel für solche wannenförmigen Transportbehälter sind Tubs oder Trays.

Vor der Sterilisierung der Primärverpackungen bzw. Primärverpackungsteile werden diese oftmals mit einer Deckschicht bedeckt. Anschließend wird der Transportbehälter durch eine Verschlussschicht verschlossen. Beispielsweise wird die Verschlussschicht auf eine Auskragung des Transportbehälters aufgeklebt. Die Sterilisierung findet dann beispielsweise mit gasförmigem Ethylenoxid statt. Bevor die sterilisierten Primärverpackungen bzw. Primärverpackungsteile verarbeitet werden können, müssen die Verschlussschicht und die Deckschicht wieder entfernt werden. Beim Entfernen der äußeren Verschlussschicht wird durch die innere Deckschicht verhindert, dass Partikel auf oder in die Primärverpackungen bzw. Primärverpackungsteile gelangen. Das anschließende Abheben der Deckschicht stellt einen anspruchsvollen Handhabungsschritt dar, weil die Deckschicht abgesenkt in dem Transportbehälter angeordnet ist. Zudem soll verhindert werden, dass beim Abheben der Deckschicht Partikel von der Deckschicht auf oder in die Primärverpackungen bzw. Primärverpackungsteile gelangen.

Aus der Praxis ist das Abheben von Deckschichten mittels vakuumbasierter Greifeinheiten bekannt. Eine solche vakuumbasierte Greifeinheit saugt sich an der Deckschicht fest und bringt dadurch die erforderliche Haltekraft auf, damit die angesaugte Deckschicht abgehoben werden kann. Vakuumbasierte Greifeinheiten haben jedoch mehrere Nachteile, welche insbesondere bei der Verarbeitung von toxischen/hochpotenten Wirkstoffen Probleme bereiten. Nach dem Aufrüsten einer pharmazeutischen Produktionsmaschine mit einer vakuumbasierten Greifeinheit muss durch einen speziellen Dekontaminationszyklus mit H2O2 (Wasserstoffperoxid) gewährleistet werden, dass auch die Vakuumkanäle der Greifeinheit ausreichend von H2O2 durchströmt werden. Eine ausreichende Durchströmung der Vakuumkanäle ist jedoch gerade bei komplex aufgebauten Greifeinheiten nur schwer zu realisieren. Bei toxischen und/oder hochpotenten Wirkstoffen muss zudem ein Filter vorgesehen werden, der verhindert, dass die Wirkstoffe in Form von Aerosolen durch das Vakuum in den Außenbereich gelangen. Weiterhin stellt das Abrüsten der Produktionsmaschine eine Herausforderung dar, weil die Vakuumleitungen bis zum Filter potentiell mit toxischen Wirkstoffen belastet sind und beim Washdown mit Wasser kaum erreicht werden. Somit muss die gesamte Baugruppe entweder manuell über Handschuheingriffe in einen dichten Beutel verpackt und später separat gereinigt werden oder automatisiert zum Beispiel durch einen Roboter über einen RTP-Port ausgeschleust werden. Vakuumbasierte Greifeinheiten haben außerdem den Nachteil, dass die Verwendung einer Unterdruckeinheit zur Erzeugung des Vakuums notwendig ist. Diese verbraucht Energie, wodurch die Betriebskosten gesteigert werden.

Der Erfindung liegt die Aufgabe zugrunde, eine Möglichkeit bereitzustellen, eine Deckschicht von Primärverpackungen bzw. Primärverpackungsteilen abzuheben, wobei eine einfache Betreibbarkeit der hierzu verwendeten Greifeinheit gegeben sein soll. Zudem soll vermieden werden, dass beim Abheben der Deckschicht Partikel von der Deckschicht auf oder in die Primärverpackungen bzw. Primärverpackungsteile gelangen.

Diese Aufgabe wird erfindungsgemäß gelöst durch ein Handhabungssystem nach Anspruch 1, durch einen Reinraum nach Anspruch 13 und durch ein Verfahren nach Anspruch 14.

Die jeweiligen Unteransprüche und die Beschreibung geben vorteilhafte Varianten und Ausführungsformen an.

Erfindungsgemäß ist also ein Handhabungssystem für einen Reinraum vorgesehen. Das Handhabungssystem umfasst wenigstens einen wannenförmigen Transportbehälter mit darin angeordneten pharmazeutischen Primärverpackungselementen. Vorzugsweise ist der wannenförmige Transportbehälter ein Tub. Der wannenförmige Transportbehälter kann jedoch beispielsweise auch ein Tray sein. Mit dem Begriff "pharmazeutische Primärverpackungselemente" sind sowohl pharmazeutische Primärverpackungen als solche als auch Primärverpackungsteile von pharmazeutischen Primärverpackungen gemeint. Pharmazeutische Primärverpackungen sind beispielsweise Injektionsfläschchen, Spritzen oder Karpulen. Pharmazeutische Primärverpackungsteile sind beispielsweise Behältnisse oder Verschlusselemente von pharmazeutischen Primärverpackungen, insbesondere Injektionsfläschchen, Spritzen oder Karpulen.

Vorzugsweise sind die Primärverpackungselemente in dem Transportbehälter genestet angeordnet. Das bedeutet, dass die Primärverpackungselemente in einer als Nest bezeichneten Kunststoffträgerplatte aufgenommen sind. Das Nest ist mitsamt den aufgenommenen Primärverpackungselementen in dem Transportbehälter angeordnet. Eine genestete Anordnung der Primärverpackungselemente ist bevorzugt. Die Primärverpackungselemente können jedoch beispielsweise auch lose nebeneinanderstehend in dem Transportbehälter angeordnet sein. Die Primärverpackungselemente können einlagig oder mehrlagig in dem Transportbehälter angeordnet sein. Beispielsweise sind bei einer mehrlagigen Anordnung mehrere Nester mit Primärverpackungselementen in dem Transportbehälter übereinandergestapelt angeordnet.

Erfindungsgemäß sind die Primärverpackungselemente von einer Deckschicht bedeckt. Die Deckschicht bedeckt die Primärverpackungselemente und ist insofern oberhalb der Primärverpackungselemente angeordnet. Bei einer mehrlagigen Anordnung von Primärverpackungselementen ist die Deckschicht oberhalb der obersten Lage von Primärverpackungselementen angeordnet. Vorzugsweise ist die Deckschicht in dem Transportbehälter angeordnet, sodass die Seitenwand des Transportbehälters die Deckschicht umschließt. Vorzugsweise ist die Deckschicht auf die Primärverpackungselemente direkt aufgelegt. Die Deckschicht kann jedoch auch von den Primärverpackungselementen beabstandet oberhalb der Primärverpackungselemente angeordnet sein. Beispielsweise liegt die Deckschicht dann auf einem Anschlag des Transportbehälters auf. Vorzugsweise ist die Deckschicht gasdurchlässig ausgebildet. Dies hat den Vorteil, dass gasförmiges Ethylenoxid die Deckschicht zur Sterilisierung der Primärverpackungselemente durchdringen kann. Vorzugsweise ist die Deckschicht als Deckfolie ausgebildet. Eine Folie ist ein dünnes, homogenes Flächengebilde. Besonders bevorzugt umfasst die Deckschicht bzw. Deckfolie ein Polyethylen-Vlies.

Das erfindungsgemäße Handhabungssystem umfasst weiterhin eine Vorrichtung zum Abheben der Deckschicht von den Primärverpackungselementen, wobei die Vorrichtung eine Greifeinheit zum Erfassen der Deckschicht umfasst.

Es ist nun vorgesehen, dass die Greifeinheit eine Haftanordnung umfasst, die durch wenigstens ein Haftelement gebildet ist, wobei das Haftelement zum adhäsiven Erfassen der Deckschicht haftstrukturiert ausgebildet ist, dass die Haftanordnung mit einer von den Primärverpackungselementen abgewandten ersten Seite der Deckschicht in flächigen Berührkontakt bringbar ist, und dass der Durchmesser des kleinsten Kreises, der in einer Halteebene der Haftanordnung liegt und die Haftanordnung umschließt, wenigstens 50 mm beträgt.

Die Haftanordnung wird erfindungsgemäß durch wenigstens ein Haftelement gebildet, also durch ein einzelnes Haftelement oder durch mehrere Haftelemente. Wird im Rahmen der Offenbarung auf die Haftanordnung verwiesen, so ist damit bei einer Haftanordnung mit einem einzelnen Haftelement das einzelne Haftelement gemeint und bei einer Haftanordnung mit mehreren Haftelementen die Gesamtheit der mehreren Haftelemente. Ist die Haftanordnung beispielsweise durch ein einzelnes Haftelement gebildet, so ist dieses einzelne Haftelement mit der ersten Seite der Deckschicht in flächigen Berührkontakt bringbar. Ist die Haftanordnung hingegen durch mehrere Haftelemente gebildet, so ist die Gesamtheit der Haftelemente gemeinsam mit der ersten Seite der Deckschicht in flächigen Berührkontakt bringbar. Insbesondere werden die mehreren Haftelemente zeitgleich mit der ersten Seite in Berührkontakt gebracht. Bei verlagerbaren Haftelementen können die Haftelemente jedoch auch nacheinander mit der ersten Seite in Berührkontakt gebracht werden. Die Halteebene ist die Ebene, in der das einzelne Haftelement bzw. die mehreren Haftelemente angeordnet ist/sind, wenn die Haftanordnung mit der ersten Seite der Deckschicht in flächigen Berührkontakt gebracht ist. Vorzugsweise sind das einzelne Haftelement bzw. die mehreren Haftelemente eben ausgebildet.

Mit einem adhäsiven Erfassen ist ein Erfassen durch Adhäsionskräfte gemeint. Adhäsionskräfte sind molekulare Anziehungskräfte, die zwischen sich berührenden Oberflächen wirken. Um ausreichend hohe Adhäsionskräfte für das Abheben der Deckschicht aufbringen zu können, ist das wenigstens eine Haftelement erfindungsgemäß haftstrukturiert ausgebildet. Insofern ist das Haftelement beispielsweise von solchen Haftelementen abzugrenzen, die zum adhäsiven Erfassen eine unstrukturierte Klebstoffschicht aufweisen. Haftstrukturierte Haftelemente als solche sind grundsätzlich bekannt. Die Adhäsionskräfte werden bei haftstrukturierten Haftelementen typischerweise zumindest im Wesentlichen durch Van-der-Waals-Kräfte gebildet. Das erfindungsgemäße wenigstens eine Haftelement kann beispielsweise eine Mikrostruktur und/oder eine Mesostruktur aufweisen. Vorzugsweise ist das wenigstens eine Haftelement aus einem Polymer gefertigt. Zum Erfassen der Deckschicht können die Haftanordnung, also das einzelne Haftelement bzw. die mehreren Haftelemente, und die Deckschicht aneinandergedrückt werden. Dies führt dazu, dass sich die besagten Adhäsionskräfte zwischen der Haftanordnung und der Deckschicht ausbilden, sodass die Deckschicht adhäsiv erfasst wird. Ist die Deckschicht erfasst, kann die Deckschicht von den Primärverpackungselementen abgehoben werden, wobei die Deckschicht durch die Adhäsionskräfte gehalten wird.

Durch die erfindungsgemäße Ausführung der Greifeinheit werden die zuvor im Zusammenhang mit vakuumbasierten Greifeinheiten erwähnten Nachteile überwunden. Das erfindungsgemäße Handhabungssystem kann einfach betrieben und gereinigt werden, was insbesondere aus der Ausführung der Greifeinheit resultiert. Vorzugsweise ist die Greifeinheit derart ausgeführt, dass sie mit üblichen pharmazeutischen Reinigungs- und Desinfektionsmitteln behandelt und/oder autoklaviert werden kann.

Der Durchmesser des kleinsten Kreises, der in der Halteebene liegt und die Haftanordnung umschließt, also das einzelne Haftelement oder die mehreren Haftelemente, beträgt erfindungsgemäß wenigstens 50 mm. Durch eine solche Ausbildung bzw. Dimensionierung der Haftanordnung wird erreicht, dass die Kanten einer erfassten Deckschicht beim Abheben selbst bei Verwendung einer biegeschlaffen Deckschicht allenfalls geringfügig herunterhängen. Entsprechend ist die Wahrscheinlichkeit gering, dass Partikel beim Abheben von der Deckschicht auf die Primärverpackungselemente oder in die Primärverpackungselemente gelangen. Bevorzugt beträgt der Durchmesser des kleinsten Kreises wenigstens 70 mm, besonders bevorzugt wenigstens 100 mm.

Gemäß einer bevorzugten Ausführungsform ist vorgesehen, dass das wenigstens eine Haftelement eine Vielzahl von elastisch verformbaren Haftvorsprüngen umfasst. Vorzugsweise beträgt ein Durchmesser der Haftvorsprünge weniger als 1 mm. Derart klein dimensionierte Haftvorsprünge können durch Verformung Unebenheiten der zu kontaktierenden Oberfläche effektiv ausgleichen, sodass ein Haftelement erhalten wird, das hohe Adhäsionskräfte ausbilden kann. Bevorzugt beträgt der Durchmesser der Haftvorsprünge weniger als 500 um, besonders bevorzugt weniger als 200 um.

Im Hinblick auf die Form der Haftvorsprünge sind verschiedene Ausführungen möglich. Vorzugsweise sind die Haftvorsprünge säulenförmig ausgebildet. Ein säulenförmig ausgebildeter Haftvorsprung weist einen zumindest im Wesentlichen konstanten, insbesondere kreisförmigen, Querschnitt auf. Alternativ dazu sind die Haftvorsprünge vorzugsweise pilzförmig ausgebildet. bei einem pilzförmigen Haftvorsprung ist die Querschnittsfläche eines zur Kontaktierung der Deckschicht dienenden Kontaktabschnitts des Haftvorsprungs größer als die Querschnittsfläche eines den Kontaktabschnitt tragenden Tragabschnitts desselben Haftvorsprungs.

Gemäß einer bevorzugten Ausführungsform ist vorgesehen, dass die Deckschicht mehrere Ecken aufweist, und dass die Haftanordnung, also das einzelne Haftelement oder die mehreren Haftelemente, derart mit der ersten Seite der Deckschicht in Berührkontakt bringbar ist, dass der Abstand zwischen den Ecken der Deckschicht und der Haftanordnung kleiner als 40 mm ist, vorzugsweise kleiner als 30 mm. Durch eine solche Anpassung der Haftanordnung an die Dimensionierung der Deckschicht kann ein Herunterhängen der Kanten der Deckschicht besonders wirksam vermieden werden.

Gemäß einer bevorzugten Ausführungsform ist vorgesehen, dass die Haftanordnung, also das einzelne Haftelement oder die mehreren Haftelemente, derart mit der ersten Seite der Deckschicht in Berührkontakt bringbar ist, dass der Abstand zwischen den Kantenmitten der Kanten der Deckschicht und der Haftanordnung kleiner als 40 mm ist, vorzugsweise weniger als 30 mm. Auch durch eine solche Anpassung der Haftanordnung an die Dimensionierung der Deckschicht kann ein Herunterhängen der Kanten der Deckschicht wirksam vermieden werden.

Bevorzugt ist das wenigstens eine Haftelement als Haftfolie ausgebildet. Ein als Haftfolie ausgebildetes Haftelement hat den Vorteil, dass die Dimensionierung des Haftelements einfach an eine gewünschte Dimensionierung angepasst werden kann. Beispielsweise wird die Haftfolie hierzu auf die gewünschte Dimensionierung zugeschnitten. Vorzugsweise ist die Haftfolie durch eine Klebeverbindung an der Greifeinheit befestigt. Sind mehrere Haftelemente vorhanden, so sind vorzugsweise sämtliche Haftelemente als Haftfolien ausgebildet.

Gemäß einer bevorzugten Ausführungsform ist vorgesehen, dass die Haftanordnung ein Haftelement aufweist, das X-förmig, C-förmig, U-förmig oder ringförmig, insbesondere kreisringförmig oder rechteckringförmig, ausgebildet ist. Bei einem derart geformten Haftelement kann eine erfasste Deckschicht mit einfachen konstruktiven Mitteln von der Greifeinheit abgelöst werden, beispielsweise durch wenigstens einen Abdrückstempel oder wenigstens einen ortsfesten Rückhalter. Vorzugsweise ist das Haftelement das einzige Haftelement der Haftanordnung. Die Haftanordnung kann jedoch auch zusätzlich noch wenigstens ein weiteres Haftelement aufweisen.

Vorzugsweise umfasst die Haftanordnung mehrere Haftelemente. Durch die Steigerung der Anzahl an Haftelementen kann ein Herunterhängen der Kanten der Deckschicht besonders wirksam vermieden werden. Vorzugsweise umfasst die Greifeinheit wenigstens drei Haftelemente, bevorzugt wenigstens vier Haftelemente. Besonders bevorzugt sind vier Haftelemente vorhanden, die an einer jeweils anderen Ecke eines gedachten Parallelogramms angeordnet sind. Typischerweise ist die Deckschicht rechteckförmig ausgebildet. Eine Greifeinheit mit vier Haftelementen, die an einer jeweils anderen Ecke eines gedachten Parallelogramms angeordnet sind, hat dann den Vorteil, dass die Haftelemente an einer jeweils anderen Ecke bzw. benachbart zu einer jeweils anderen Ecke der Deckschicht oder an einer jeweils anderen Kantenmitte bzw. benachbart zu einer jeweils anderen Kantenmitte der Deckschicht anordenbar sind. Besonders bevorzugt umfasst die Haftanordnung wenigstens vier und höchstens zehn Haftelemente.

Gemäß einer bevorzugten Ausführungsform ist vorgesehen, dass die Primärverpackungselemente eine der Deckschicht zugewandte erste Endseite umfassen, und dass die mehreren Haftelemente mit der ersten Seite der Deckschicht derart in Berührkontakt bringbar sind, dass jedes der Haftelemente bezogen auf eine senkrecht zu der Halteebene ausgerichtete Blickrichtung mit jeweils wenigstens einer ersten Endseite eines direkt unterhalb der Deckschicht angeordneten Primärverpackungselements wenigstens bereichsweise zur Deckung gebracht ist. Ist das vorstehende Merkmal erfüllt, so stützen sich die durch die Haftelemente kontaktierten Abschnitte der Deckschicht bei entsprechender Ausrichtung und Anordnung der Greifeinheit relativ zu dem Transportbehälter an jeweils wenigstens einer der ersten Endseiten ab. Insbesondere bei biegeschlaffen Deckschichten kann dadurch die Andrückkraft gesteigert werden, mit der die Haftelemente und die Deckschicht aneinandergedrückt werden. Wären eines oder mehrere der Haftelemente beim Kontaktieren der Deckschicht nicht mit wenigstens einer der ersten Endseiten zur Deckung gebracht, so könnte sich die Deckschicht im Bereich des betreffenden Haftelements bzw. der betreffenden Haftelemente durchbiegen, wodurch das Erfassen der Deckschicht jedenfalls erschwert wäre. Die ersten Endseiten der Primärverpackungselemente werden beispielsweise durch Böden der Primärverpackungselemente oder Öffnungsränder der Primärverpackungselemente gebildet.

Gemäß einer bevorzugten Ausführungsform ist vorgesehen, dass die Greifeinheit mehrere Aufnahmestrukturen umfasst, und dass die Haftelemente an Endseiten der Aufnahmestrukturen angeordnet sind. Durch die Anordnung an den Endseiten der Aufnahmestrukturen können die Haftelemente, bezogen auf eine senkrecht zu der Halteebene erstreckte Achse, von einer Grundstruktur der Greifeinheit axial beabstandet werden. Die Haftelemente sind dann für die Kontaktierung der Deckschicht leichter zugänglich. Insbesondere ist an jeder Endseite jeweils nur ein Haftelement angeordnet. Es können jedoch auch mehrere Haftelemente an derselben Endseite angeordnet sein. Vorzugsweise sind die Aufnahmestrukturen säulenförmig oder stempelförmig ausgebildet. Dabei kommen verschiedene Querschnitte für die säulenförmigen Aufnahmestrukturen infrage. Beispielsweise weisen die säulenförmigen Aufnahmestrukturen einen kreisförmigen, rechteckförmigen oder elliptischen Querschnitt auf. Sind die Aufnahmestrukturen stempelförmig ausgebildet, so weisen sie einen verbreiterten Endabschnitt auf.

Gemäß einer bevorzugten Ausführungsform ist vorgesehen, dass die Aufnahmestrukturen an einem jeweils anderen parallel oder schräg zu der Halteebene erstreckten Ausleger der Greifeinheit angeordnet sind. Durch die Ausleger kann ein gewünschter Abstand zwischen den Aufnahmestrukturen bzw. den daran angeordneten Haftelementen vorteilhaft realisiert werden.

Gemäß einer bevorzugten Ausführungsform ist vorgesehen, dass zwischen den Aufnahmestrukturen und der Greifeinheit eine jeweils andere Federeinheit gehalten ist, insbesondere vorgespannt gehalten ist, wobei die Aufnahmestrukturen durch die Federeinheiten jeweils mit einer Rückstellkraft beaufschlagt werden, und wobei die Aufnahmestrukturen entgegen der jeweiligen Rückstellkraft in eine senkrecht zu der Halteebene ausgerichtete erste Richtung verlagerbar sind. Durch eine solche Ausbildung der Greifeinheit kann die Andrückkraft beim Aneinanderdrücken der Haftanordnung und der Deckschicht in Abhängigkeit von der Ausbildung der Federeinheiten begrenzt und infolgedessen ein Überdrücken der Haftelemente vermieden werden. Überdrücken beschreibt den Effekt, dass die Haftelemente und die Deckschicht mit einer derart hohen Andrückkraft aneinandergedrückt werden, dass die Haftvorsprünge der Haftelemente umknicken. Die freien Endseiten der Haftvorsprünge sind dann schräg zu der Deckschicht ausgerichtet, sodass allenfalls verringerte Adhäsionskräfte wirken können. Dieser beim Überdrücken auftretende Effekt wird auch als "Eulerscher Knickfall" bezeichnet.

Gemäß einer bevorzugten Ausführungsform ist vorgesehen, dass die Aufnahmestrukturen in einer jeweils anderen Vertiefung der Greifeinheit verlagerbar gehalten sind, dass die Greifeinheit eine Aktuatoreinrichtung mit wenigstens einem Aktuator umfasst, und dass die Aktuatoreinrichtung ausgebildet ist, um die Aufnahmestrukturen zum Ablösen einer erfassten Deckschicht derart weit in die erste Richtung zu verlagern, dass die Haftelemente in den Vertiefungen angeordnet sind. Durch die Verlagerung der Haftelemente in die Vertiefungen wird eine erfasste Deckschicht sicher abgelöst. Insbesondere wird die Deckschicht beim Verlagern der Haftelemente in die Vertiefungen durch eine Basisfläche der Greifeinheit zurückhalten, von der die Vertiefungen ausgehen.

Gemäß einer bevorzugten Ausführungsform ist vorgesehen, dass jeder Aufnahmestruktur ein jeweils anderer Aktuator zum Verlagern der Aufnahmestruktur zugeordnet ist. Hierdurch kann eine erfasste Deckschicht besonders kontrolliert von der Greifeinheit abgelöst werden. Beispielsweise werden die Haftelemente hierzu nacheinander oder paarweise in die Vertiefungen verlagert.

Vorzugsweise umfasst das Handhabungssystem eine Handhabungseinrichtung, insbesondere Vierachsroboter, Sechsachsroboter oder Handhabungseinrichtung mit zwei beweglichen Achsen, die ausgebildet ist, um die Greifeinheit an die Deckschicht heranzubewegen und die Haftanordnung an die erste Seite der Deckschicht anzudrücken. Vorzugsweise ist die Greifeinheit lösbar mit der Handhabungseinrichtung verbunden. Die Greifeinheit kann jedoch auch integraler Bestandteil der Handhabungseinrichtung sein. Das Handhabungssystem kann auch eine Handhabungseinrichtung, insbesondere Vierachsroboter, Sechsachsroboter oder Handhabungseinrichtung mit zwei beweglichen Achsen, umfassen, die ausgebildet ist, um den Transportbehälter mit der Deckschicht an die Haftanordnung heranzubewegen und die erste Seite der Deckschicht an die Haftanordnung anzudrücken. Eine solche Handhabungseinrichtung kann alternativ oder zusätzlich zu der zuvor erwähnten Handhabungseinrichtung vorhanden sein.

Gemäß einer bevorzugten Ausführungsform ist vorgesehen, dass die Greifeinheit wenigstens einen Abdrückstempel umfasst, der zum Ablösen einer erfassten Deckschicht gegen die erste Seite der Deckschicht drückbar ist. Auch durch einen oder mehrere Abdrückstempel kann eine erfasste Deckschicht sicher abgelöst werden. Sind mehrere Abdrückstempel vorhanden ergibt sich zudem der Vorteil, dass der Ablösevorgang besonders präzise kontrolliert werden kann. Beispielsweise werden die Abdrückstempel hierzu nacheinander gegen die erste Seite der Deckschicht gedrückt. Vorzugsweise ist der wenigstens eine Abdrückstempel entlang einer Achse verlagerbar, die senkrecht zu der Halteebene ausgerichtet ist.

Gemäß einer bevorzugten Ausführungsform ist vorgesehen, dass die Greifeinheit wenigstens zwei zueinander verlagerbare Abschnitte umfasst, die ein jeweils anderes Haftelement oder eine jeweils andere Gruppe von Haftelementen tragen, wobei ein Aktuator zum Verlagern der Abschnitte zueinander vorhanden ist, und wobei eine erfasste Deckschicht durch Verlagern der Abschnitte zueinander von der Greifeinheit ablösbar ist. Auch durch eine solche Ausführung der Greifeinheit kann eine erfasste Deckschicht sicher abgelöst werden. Vorzugsweise sind die Abschnitte entlang einer Achse zueinander verlagerbar, die parallel zu der Halteebene ausgerichtet ist. Werden die Abschnitte entlang dieser Achse beispielsweise aufeinander zubewegt, so wird der Winkel zwischen den Haftelementen und den erfassten Abschnitten der Deckschicht unter Biegung der Deckschicht vergrößert. Infolgedessen löst sich die Deckschicht von den Haftelementen ab.

Vorzugsweise umfasst das Handhabungssystem wenigstens einen ortsfesten Rückhalter, der derart ausgebildet und angeordnet ist, dass er an der ersten Seite einer erfassten Deckschicht zur Anlage bringbar ist, wobei die erfasste Deckschicht bei an der ersten Seite zur Anlage gebrachtem Rückhalter durch Bewegen der Greifeinheit in eine von der Deckschicht weggerichtete Richtung von der Greifeinheit ablösbar ist. Auch durch einen solchen Rückhalter kann eine erfasste Deckschicht sicher von der Greifeinheit abgelöst werden. Vorzugsweise ist der Rückhalter derart ausgebildet und angeordnet, dass er zwischen zwei Haftelementen oder zwischen zwei Schenkeln eines einzelnen Haftelements an der ersten Seite der Deckschicht zur Anlage bringbar ist. Bei einer solchen Anlage des Rückhalters wird die Deckschicht besonders sicher abgelöst. Besonders bevorzugt ist der Rückhalter spatelförmig ausgebildet. Es können auch mehrere Rückhalter vorhanden sein, die sich beispielsweise in ihrer Dimensionierung voneinander unterscheiden.

Gemäß einer bevorzugten Ausführungsform ist vorgesehen, dass unterhalb des Rückhalters eine Rutscheinheit mit einer Rutschfläche angeordnet ist, wobei die Rutschfläche oder eine gedachte Verlängerung der Rutschfläche in Rutschrichtung durch eine Auffangöffnung eines Auffangbehälters für Deckschichten verläuft. Deckschichten, die durch den Rückhalter von der Greifeinheit abgelöst werden, fallen auf die Rutschfläche auf und rutschen in den Auffangbehälter. Durch das Sammeln der Deckschichten in dem Auffangbehälter wird die Entsorgung der Deckschichten erleichtert.

Vorzugsweise umfasst das Handhabungssystem wenigstens eine Sensoreinheit, die ausgebildet ist, um eine durch die Greifeinheit erfasste Deckschicht zu erkennen. Es wird also eine Möglichkeit geschaffen, den ordnungsgemäßen Ablauf eines Abhebevorgangs zu kontrollieren. Vorzugsweise ist die Sensoreinheit als Strahlungssensor, insbesondere Kamerasensor oder Lasersensor, ausgebildet. Alternativ dazu ist die Sensoreinheit vorzugsweise als Kraftsensor ausgebildet und derart in die Greifeinheit integriert, dass die Gewichtskraft der erfassten Deckschicht auf den Kraftsensor wirkt. Eine als Kraftsensor ausgebildete Sensoreinheit hat zudem den Vorteil, dass die Andrückkraft gemessen werden kann, die beim Aneinanderdrücken auf die Haftanordnung wirkt. Entsprechend ermöglicht es ein solcher Kraftsensor, das Aneinanderdrücken derart zu steuern, dass ein Überdrücken des Haftelements bzw. der Haftelemente nicht stattfindet.

Die zu lösende Aufgabe wird auch durch einen Reinraum mit den Merkmalen des Anspruchs 19 gelöst. In dem Reinraum ist ein Handhabungssystem mit den oben beschriebenen Merkmalen angeordnet. Vorzugsweise ist das Handhabungssystem Teil einer pharmazeutischen Produktionsmaschine.

Hinsichtlich der mit dem Reinraum erzielbaren Vorteile wird auf die diesbezüglichen Ausführungen zum Handhabungssystem bzw. zum Verfahren verwiesen. Zur weiteren Ausgestaltung des Reinraums können die im Zusammenhang mit dem Handhabungssystem bzw. dem Verfahren beschriebenen Merkmale dienen.

Die zu lösende Aufgabe wird auch durch ein Verfahren zum Abheben von Deckschichten gelöst, wobei das Verfahren umfasst:
Bereitstellen eines wannenförmigen Transportbehälters, insbesondere Tub, mit darin angeordneten pharmazeutischen Primärverpackungselementen, insbesondere Behältnisse oder Verschlusselemente, wobei die Primärverpackungselemente von einer Deckschicht, insbesondere Deckfolie, bedeckt sind.

Bereitstellen einer Vorrichtung mit einer Greifeinheit, die eine Haftanordnung umfasst, die durch wenigstens ein Haftelement gebildet ist, wobei das Haftelement zum adhäsiven Erfassen der Deckschicht haftstrukturiert ausgebildet ist, und wobei der Durchmesser des kleinsten Kreises, der in einer Halteebene der Haftanordnung liegt und die Haftanordnung umschließt, wenigstens 50 mm beträgt.

Aneinanderdrücken der Haftanordnung und der Deckschicht, wobei die Haftanordnung mit einer von den Primärverpackungselementen abgewandten ersten Seite der Deckschicht in flächigen Berührkontakt gebracht wird, und wobei die Deckschicht durch die Haftanordnung adhäsiv erfasst wird.

Abheben der erfassten Deckschicht von den Primärverpackungselementen. Ablösen der abgehobenen Deckschicht von der Greifeinheit.

Vorteile und Weiterbildungsmöglichkeiten des Handhabungssystem sind als ebenso in Bezug auf das Verfahren beschrieben zu verstehen und umgekehrt sind Vorteile und Weiterbildungsmöglichkeiten des Verfahrens als ebenso in Bezug auf das Handhabungssystem beschrieben zu verstehen.

Im Hinblick auf das Aneinanderdrücken der Haftanordnung und der Deckschicht sind verschiedene Ausführungen des Verfahrens möglich. Bei einer bevorzugten ersten Ausführungsform wird der Transportbehälter mit der Deckschicht gegen die ortsfeste Greifeinheit gedrückt. Bei einer bevorzugten zweiten Ausführungsform wird die Greifeinheit mit der Haftanordnung gegen die Deckschicht des ortsfesten Transportbehälters gedrückt. Bei einer dritten Ausführungsform werden die Haftanordnung und die Deckschicht aufeinander zu bewegt, sodass weder die Greifeinheit noch der Transportbehälter ortsfest sind.

Sind mehrere Haftelemente vorhanden, so kontaktieren die Haftelemente beim Aneinanderdrücken einen jeweils anderen Abschnitt der Deckschicht. Vorzugsweise werden die Haftelemente und die Deckschicht derart aneinandergedrückt, dass sich die durch die Haftelemente kontaktierten Abschnitte der Deckschicht an jeweils wenigstens einem unmittelbar unterhalb der Deckschicht angeordneten Primärverpackungselement wenigstens bereichsweise abstützen. Die Stützung der kontaktierten Abschnitte hat den Vorteil, dass selbst bei einer biegeschlaffen Deckschicht eine Andrückkraft mit einer gewünschten Höhe erreicht werden kann.

Vorzugsweise wird die Deckschicht durch ruckartiges Bewegen der Greifeinheit von der Greifeinheit abgelöst. Es werden also die Massenträgheit und der Luftwiderstand der Deckschicht zum Ablösen genutzt. Diese Vorgehensweise hat den Vorteil, dass an die verwendete Greifeinheit nur geringfügige konstruktive Anforderungen bestehen. Alternativ wird die Deckschicht vorzugsweise durch einen ortsfesten Rückhalter von der Greifeinheit abgelöst. Dabei wird die erste Seite der erfassten Deckschicht an dem Rückhalter zur Anlage gebracht. Durch Bewegen der Greifeinheit in eine von der Deckschicht weggerichtete Richtung wird die Deckschicht dann mittels des Rückhalters abgelöst. Alternativ wird die Deckschicht vorzugsweise durch Verlagern von Haftelementen zueinander von der Greifeinheit abgelöst. Durch die Verlagerung von Haftelementen zueinander wird der Winkel zwischen den Haftelementen und den erfassten Abschnitten der Deckschicht vergrößert. Infolgedessen löst sich die Deckschicht von den Haftelementen ab. Alternativ wird die Deckschicht vorzugsweise durch Verlagern von Haftelementen in Vertiefungen der Greifeinheit von der Greifeinheit abgelöst. Werden die Haftelemente in die Vertiefungen verlagert, so wird die erfasste Deckschicht beispielsweise durch eine Basisfläche der Greifeinheit zurückgehalten, von der die Vertiefungen ausgehen. Alternativ wird die Deckschicht vorzugsweise durch wenigstens einen an der Greifeinheit verlagerbar gehaltenen Abdrückstempel von der Greifeinheit abgelöst. Auch durch einen oder mehrere Abdrückstempel kann die Deckschicht sicher von der Greifeinheit abgelöst werden.

Die Erfindung wird im Folgenden anhand der Figuren näher beschrieben, wobei gleiche oder funktional gleiche Elemente gegebenenfalls lediglich einmal mit Bezugszeichen versehen sind. Die Figuren dienen als Beispiel und sind nicht einschränkend zu verstehen. Es zeigen
- Fig. 1: eine perspektivische Darstellung eines Handhabungssystems, das einen Transportbehälter mit darin angeordneten pharmazeutischen Primärverpackungselementen und eine Vorrichtung mit einer Greifeinheit umfasst;
- Fig. 2: eine Schnittdarstellung des Transportbehälters und der Greifeinheit beim Abheben einer in dem Transportbehälter angeordneten Deckschicht durch die Greifeinheit;
- Fig. 3: eine perspektivische Darstellung des Handhabungssystems nach dem Abheben der Deckschicht;
- Fig. 4: eine Seitenansicht einer Ablöseeinheit zum Ablösen einer erfassten Deckschicht von der Greifeinheit;
- Fig. 5: eine perspektivische Darstellung der in Figur 4 gezeigten Ablöseeinheit;
- Fig. 6: eine Darstellung eines weiteren Ausführungsbeispiels der Greifeinheit,
- Fig. 7: eine Schnittdarstellung eines weiteren Ausführungsbeispiels der Greifeinheit,
- Fig. 8: eine Schnittdarstellung eines weiteren Ausführungsbeispiels der Greifeinheit,
- Fig. 9: eine weitere Schnittdarstellung der in Figur 8 gezeigten Greifeinheit und
- Fig. 10: eine perspektivische Darstellung des Handhabungssystems mit einer weiteren Greifeinheit.

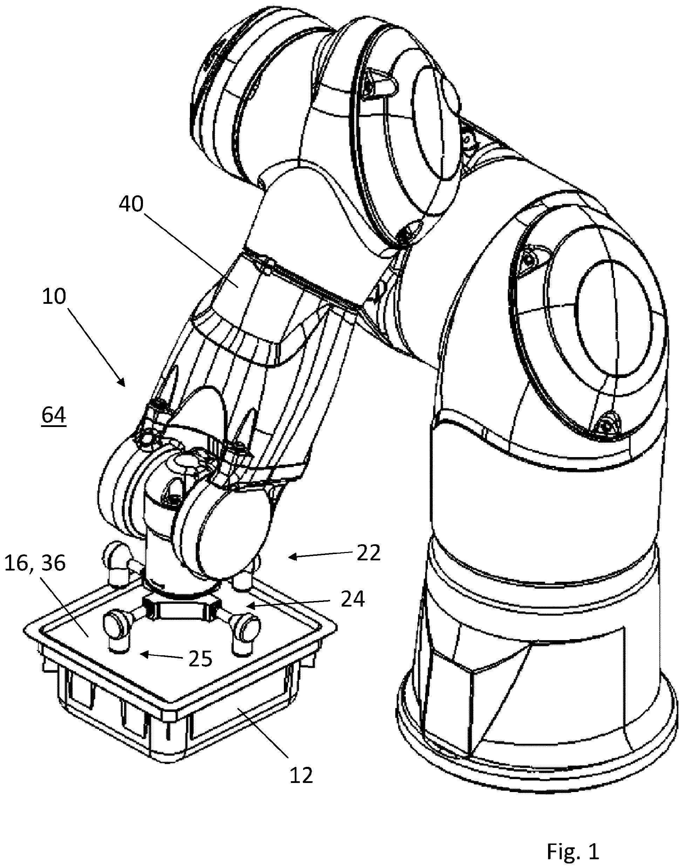

Die Figuren 1 bis 3 zeigen ein Handhabungssystem 10, das als Teil einer pharmazeutischen Produktionsmaschine in einem Reinraum 64 angeordnet ist.

Das System 10 umfasst wenigstens einen wannenförmigen Transportbehälter 12. In den Figuren 1 bis 3 ist jeweils nur ein einziger wannenförmiger Transportbehälter 12 dargestellt. Typischerweise ist jedoch eine Vielzahl von wannenförmigen Transportbehältern 12 vorhanden.

Der Transportbehälter 12 ist vorliegend als Tub 12 ausgebildet. In dem Transportbehälter 12 sind pharmazeutische Primärverpackungselemente 14 angeordnet bzw. gelagert. Bei den Primärverpackungselementen 14 handelt es sich bei dem dargestellten Ausführungsbeispiel um Behältnisse 14 von Spritzen.

Die Primärverpackungselemente 14 sind vorliegend genestet in dem Transportbehälter 12 angeordnet. Das bedeutet, dass die Primärverpackungselemente 14 in einem Nest 15 aufgenommen sind. Das Nest 15 ist mitsamt der Primärverpackungselemente 14 in dem Transportbehälter 12 angeordnet.

Die Primärverpackungselemente 14 sind von einer Deckschicht 16 bedeckt. Vorliegend ist die Deckschicht 16 auf die Primärverpackungselemente 14 direkt aufgelegt. Die Primärverpackungselemente 14 umfassen jeweils eine der Deckschicht 16 zugewandte Endseite 17. Die Endseiten 17 werden vorliegend durch Öffnungsränder der Primärverpackungselemente 14 gebildet. Die Deckschicht 16 wird von einer Seitenwand 18 des Transportbehälters 12 umschlossen und ist insofern in dem Transportbehälter 12 angeordnet. Bei dem dargestellten Ausführungsbeispiel ist die Deckschicht 16 eine biegeschlaffe Deckfolie 16.

Die Deckschicht 16 bzw. Deckfolie 16 ist vorliegend gasdurchlässig ausgebildet und umfasst hierzu ein Polyethylen-Vlies. Die gasdurchlässige Ausbildung der Deckschicht 16 hat den Vorteil, dass bei einer Sterilisation mit einem gasförmigen Sterilisationsmittel wie beispielsweise Ethylenoxid das Sterilisationsmittel durch die Deckschicht 16 hindurchtreten kann.

Der Transportbehälter 12 umfasst eine seitliche Auskragung 20. Typischerweise ist der Transportbehälter 12 während der Sterilisation durch eine auf die Auskragung 20 aufgeklebte Verschlussschicht verschlossen. Vorzugsweise entspricht die Verschlussschicht im Hinblick auf ihre Ausbildung der Deckschicht 16. In den Figuren 1 bis 3 ist die besagte Verschlussschicht bereits von dem Transportbehälter 12 entfernt und deshalb nicht erkenntlich.

Das Handhabungssystem 10 umfasst außerdem eine Vorrichtung 22 zum Abheben der Deckschicht 16. Die Vorrichtung 22 umfasst eine Greifeinheit 24 mit einer Haftanordnung 25.

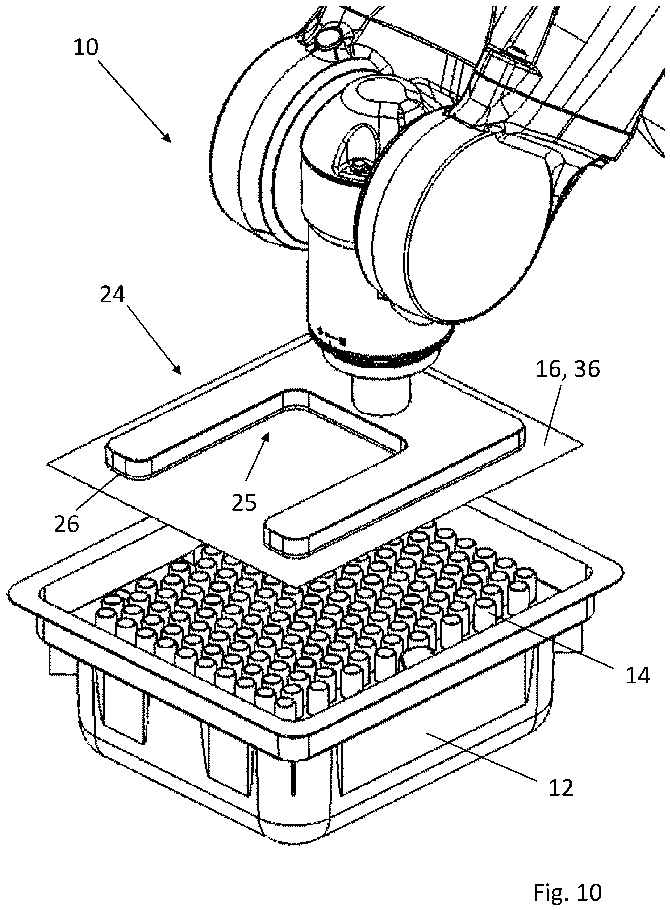

Bei dem in den Figuren 1 bis 3 dargestellten Ausführungsbeispiel wird die Haftanordnung 25 durch mehrere voneinander beabstandet angeordnete Haftelemente 26 gebildet. Die Haftanordnung 25 kann jedoch auch durch ein einzelnes Haftelement 26 gebildet sein, wie beispielsweise in Figur 10 gezeigt. Unabhängig von der Anzahl an Haftelementen 26 ist die Haftanordnung 25 bei sämtlichen in den Figuren dargestellten Ausführungsbeispielen derart dimensioniert, dass der kleinste Kreis, der in einer Halteebene der Haftanordnung 25 liegt und die Haftanordnung 25, also die mehreren Haftelemente 26 oder das einzelne Haftelement 26, umschließt, einen Durchmesser von wenigstens 50 mm aufweist. Vorzugsweise weist der Kreis einen Durchmesser von wenigstens 70 mm auf, besonders bevorzugt einen Durchmesser von wenigstens 100 mm. In den dargestellten Ausführungsbeispielen sind die Haftelemente 26 als Haftfolien 26 ausgebildet.

Die Haftelemente 26 sind zum adhäsiven Erfassen der Deckschicht 16 haftstrukturiert ausgebildet. Die Haftstruktur der Haftelemente 26 wird vorzugsweise jeweils durch eine Vielzahl von elastisch verformbaren Haftvorsprüngen gebildet. Vorzugsweise beträgt ein Durchmesser der Haftvorsprünge weniger als 1 mm. Die Haftstruktur ist dann entsprechend als Mikrostruktur ausgebildet. Aufgrund ihrer Dimensionierung sind die Haftvorsprünge in den Figuren nicht erkenntlich. Beispielsweise sind die Haftvorsprünge stiftförmig oder pilzförmig ausgebildet.

Bei dem in den Figuren 1 bis 3 dargestellten Ausführungsbeispiel sind vier Haftelemente 26 vorhanden. Die Haftelemente 26 sind an einer jeweils anderen Ecke eines gedachten Parallelogramms angeordnet. Vorliegend ist das Parallelogramm ein Quadrat.

Die Greifeinheit 24 umfasst einen zentralen Grundkörper 28. An dem Grundkörper 28 sind vorliegend vier Ausleger 30 angeordnet, die sich ausgehend von dem Grundkörper 28 parallel zu der Halteebene erstrecken. An den äußeren Enden der Ausleger 30 ist jeweils eine vorliegend säulenförmige Aufnahmestruktur 32 angeordnet. Die Haftelemente 26 sind an Endseiten 34 der säulenförmigen Aufnahmestrukturen 32 angeordnet.

Die Haftelemente 26 sind derart angeordnet, dass sie gemeinsam mit einer von den Primärverpackungselementen 14 abgewandten ersten Seite 36 der Deckschicht 16 in flächigen Berührkontakt bringbar sind. In dem dargestellten Ausführungsbeispiel sind die Haftelemente 26 derart angeordnet, dass sie benachbart zu einer jeweils anderen Kante der Deckschicht 16 mit der ersten Seite 36 der Deckschicht 16 in Berührkontakt bringbar sind. Der Abstand zwischen den Kantenmitten und dem nächstgelegenen Haftelement 26 ist kleiner als 40 mm.

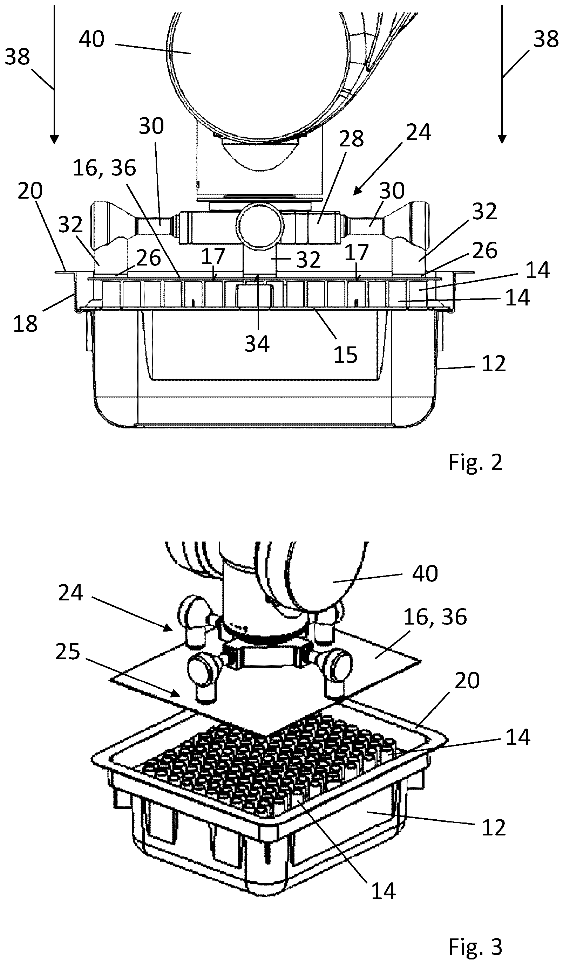

Vorliegend sind die Haftelemente 26 komplementär zu den Primärverpackungselementen 14 angeordnet. Die Haftelemente 26 sind also mit der ersten Seite 36 der Deckschicht 16 derart in Berührkontakt bringbar, dass jedes der Haftelemente 26 bezogen auf eine senkrecht zu der Halteebene ausgerichtete Blickrichtung 38 mit jeweils wenigstens einer ersten Endseite 17 eines direkt unterhalb der Deckschicht 16 angeordneten Primärverpackungselements 14 wenigstens bereichsweise zur Deckung gebracht ist. Dies ist in Figur 2 deutlich zu erkennen. Der Vorteil einer solchen komplementären Anordnung der Haftelemente 26 und der Primärverpackungselemente 14 wird nachstehend noch näher erläutert.

Die Vorrichtung 22 umfasst außerdem eine Handhabungseinrichtung 40. Die Handhabungseinrichtung 40 ist beispielhaft als Sechsachsroboter 40 ausgebildet. Bei dem dargestellten Ausführungsbeispiel ist die Handhabungseinrichtung 40 ausgebildet, um die Greifeinheit 24 an die Deckschicht 16 heranzubewegen und die Haftelemente 26 an die Deckschicht 16 anzudrücken. Alternativ kann die Handhabungseinrichtung 40 auch ausgebildet sein, um den Transportbehälter 12 mit der darin befindlichen Deckschicht 16 an die Haftelemente 26 heranzubewegen und die Deckschicht 16 durch Bewegen des Transportbehälters 12 an die Haftelemente 26 anzudrücken. Bei einer solchen Ausführung ist die Greifeinheit 24 vorzugsweise ortsfest angeordnet.

Nachfolgend wird ein Verfahren zum Abheben der Deckschicht 16 von den Primärverpackungselementen 14 näher erläutert. Die Greifeinheit 24 wird durch die Handhabungseinrichtung 40 an die Deckschicht 16 heranbewegt und die Haftanordnung 25 wird an die erste Seite 36 der Deckschicht 16 angedrückt. Durch das Andrücken der Haftanordnung 25 an die Deckschicht 16 wird die Deckschicht 16 durch die Haftanordnung 25, also die mehreren Haftelemente 26, adhäsiv erfasst.

Die Greifeinheit 24 und der Transportbehälter 12 sind beim Aneinanderdrücken vorzugsweise relativ zueinander derart ausgerichtet, dass jedes der Haftelemente 26 bezogen auf die Blickrichtung 38 mit jeweils wenigstens einer ersten Endseite 17 eines direkt unterhalb der Deckschicht 16 angeordneten Primärverpackungselements 14 wenigstens bereichsweise zur Deckung gebracht ist. Dies hat zur Folge, dass die durch die Haftelemente 26 kontaktierten Abschnitte der Deckschicht 16 durch die unmittelbar darunter angeordneten Primärverpackungselemente 14 gestützt werden. Insbesondere bei einer biegeschlaffen Deckschicht 16 könnte eine nicht komplementäre Anordnung der Haftelemente 26 und der Primärverpackungselemente 14 bei der Kontaktierung der Deckschicht 16 zu einem Durchbiegen der Deckschicht 16 führen. Das adhäsive Erfassen der Deckschicht 16 würde dadurch zumindest erschwert werden.

Die Haftanordnung 25 wird vorzugsweise mit einer vorgegebenen Andrückkraft an die Deckschicht 16 angedrückt. Die Andrückkraft ist bevorzugt derart gewählt, dass ein Überdrücken der Haftelemente 26 vermieden wird.

Nach dem Erfassen wird die Deckschicht 16 durch die Handhabungseinrichtung 40 von den Primärverpackungselementen 14 abgehoben. Aufgrund der zuvor beschriebenen Dimensionierung der Haftanordnung 25 hängen die Kanten und die Ränder der Deckschicht 16 beim Abheben allenfalls geringfügig herunter. Entsprechend ist die Wahrscheinlichkeit jedenfalls äußerst gering, dass beim Abheben Partikel von der Deckschicht 16 auf oder in die Primärverpackungselemente 14 gelangen.

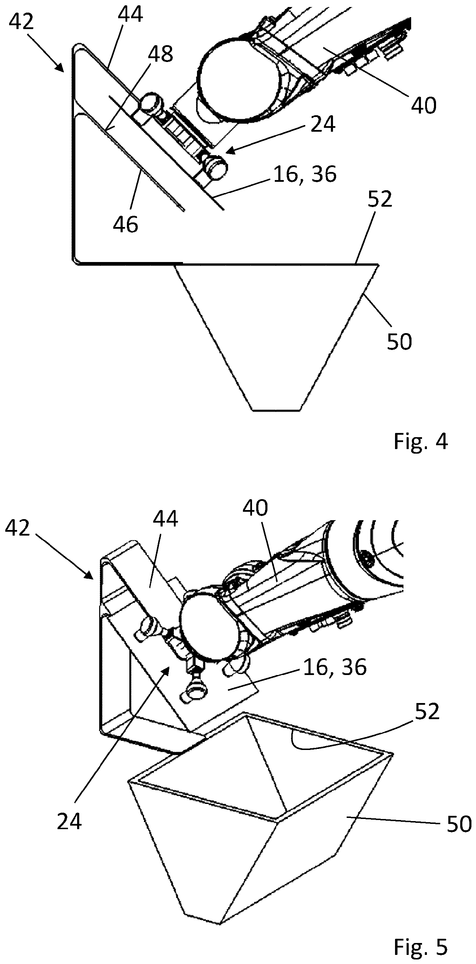

Nach dem Abheben wird die Deckschicht 16 von der Greifeinheit 24 abgelöst, sodass die Greifeinheit 24 für einen darauffolgenden Abhebevorgang an einem weiteren Transportbehälter 12 genutzt werden kann. Im Hinblick auf das Ablösen der Deckschicht 16 sind verschiedene vorteilhafte Vorgehensweisen möglich, die im Folgenden mit Bezug auf die in den Figuren 4 bis 10 dargestellten Handhabungssysteme 10 bzw. Greifeinheiten 24 näher erläutert werden.

Bei dem in den Figuren 4 und 5 dargestellten Ausführungsbeispiel umfasst das Handhabungssystem 10 eine Ablöseeinheit 42 mit einem ortsfesten Rückhalter 44, der vorliegend spatelförmig ausgebildet ist. Der Rückhalter 44 wird an der ersten Seite 36 einer erfassten Deckschicht 16 zur Anlage gebracht. Ist der Rückhalter 44 an der ersten Seite 36 zur Anlage gebracht, so wird die Deckschicht 16 durch Bewegen der Greifeinheit 24 in eine von der Deckschicht 16 weggerichtete Richtung von der Greifeinheit 24 abgelöst. Aufgrund der spatelförmigen Ausbildung des Rückhalters 44 ist der schmale Rückhalter 44 zwischen zwei Haftelementen 26 an der ersten Seite 36 der Deckschicht 16 zur Anlage bringbar. Durch eine solche Anlage des Rückhalters 44 an der ersten Seite 36 der Deckschicht 16 kann die Deckschicht besonders sicher von der Greifeinheit 24 abgelöst werden.

Die Ablöseeinheit 42 umfasst bei dem dargestellten Ausführungsbeispiel außerdem eine Rutscheinheit 46 mit einer Rutschfläche 48. Die Rutscheinheit 46 ist unterhalb des Rückhalters 44 angeordnet, sodass abgelöste Deckschichten 16 auf die Rutschfläche 48 der Rutscheinheit 46 fallen.

Das Handhabungssystem 10 umfasst außerdem einen Auffangbehälter 50 für Deckschichten 16. Der Auffangbehälter 50 ist derart angeordnet, dass eine gedachte Verlängerung der Rutschfläche 48 in Rutschrichtung durch eine Auffangöffnung 52 des Auffangbehälters 50 verläuft. Auf die Rutschfläche 48 fallende Deckschichten 16 werden entsprechend dem Auffangbehälter 50 zugeführt.

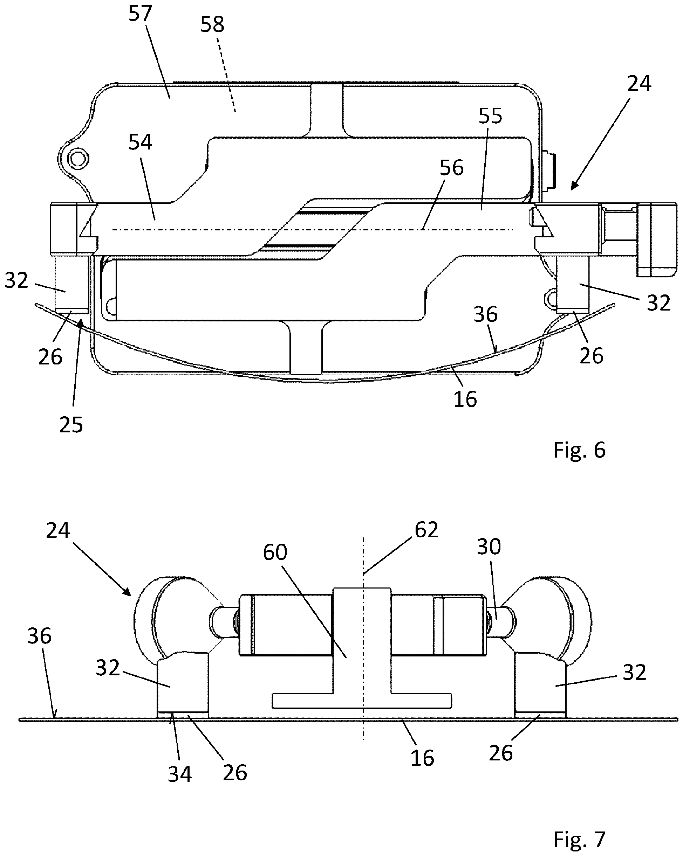

Figur 6 zeigt eine Darstellung eines weiteren Ausführungsbeispiels der Greifeinheit 24, wobei lediglich zwei der Haftelemente 26 erkenntlich sind. Die Greifeinheit 24 umfasst einen ersten Abschnitt 54 und einen zweiten Abschnitt 55, wobei jeder der Abschnitte 54 und 55 ein jeweils anderes der dargestellten Haftelemente 26 trägt. Insbesondere umfasst die Haftanordnung 25 vier Haftelemente 26, wobei jeder der Abschnitte 54 und 55 jeweils zwei der Haftelemente 26 trägt. Es kann jedoch auch einer der Abschnitte 54 und 55 drei Haftelemente 26 tragen und der andere der Abschnitte 54 und 55 nur ein Haftelement 26. Die Abschnitte 54 und 55 sind relativ zueinander verlagerbar. Vorliegend sind die Abschnitte 54 und 55 entlang einer Achse 56 zueinander verlagerbar, die parallel zu der Halteebene ausgerichtet ist. Zur Verlagerung der Abschnitte 54 und 55 zueinander ist ein Aktuator 58 vorhanden. Der Aktuator 58 ist in einem Gehäuse 57 der Greifeinheit 24 angeordnet und deshalb nicht erkenntlich.

Um bei der in Figur 6 dargestellten Greifeinheit 24 die Deckschicht 16 abzulösen, werden die Abschnitte 54 und 55 durch den Aktuator 58 vorzugsweise derart verlagert, dass der Abstand zwischen den dargestellten Haftelementen 26 verringert wird. Dies führt dazu, dass sich der Winkel zwischen den Haftelementen 26 und der erfassten Deckschicht 16 vergrößert. Infolgedessen wird die Deckschicht 16 von der Greifeinheit 24 abgelöst, wie in Figur 6 gezeigt.

Figur 7 zeigt eine Schnittdarstellung eines weiteren Ausführungsbeispiels der Greifeinheit 24. Auch bei der in Figur 7 gezeigten Greifeinheit 24 sind lediglich zwei der Haftelemente 26 erkenntlich. Die Greifeinheit 24 umfasst einen Abdrückstempel 60, der an der Greifeinheit 24 verlagerbar gehalten ist. Vorliegend ist der Abdrückstempel 60 entlang einer senkrecht zu der Halteebene ausgerichteten Achse 62 verlagerbar. Abweichend von dem in Figur 7 gezeigten Beispiel können auch mehrere Abdrückstempel 60 vorhanden sein.

Um bei der in Figur 7 dargestellten Greifeinheit 24 eine erfasste Deckschicht 16 abzulösen, wird der Abdrückstempel 60 entlang der Achse 62 verlagert und gegen die erste Seite 36 der Deckschicht 16 gedrückt.

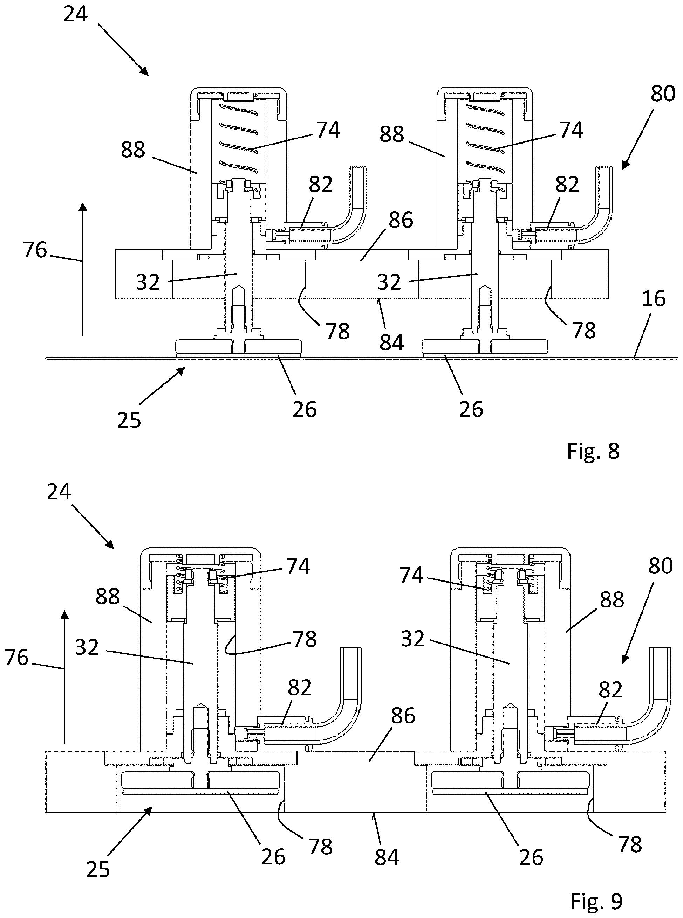

Die Figuren 8 und 9 zeigen Schnittdarstellungen eines weiteren Ausführungsbeispiels der Greifeinheit 24. Dabei ist jeweils lediglich ein Ausschnitt der Greifeinheit 24 dargestellt. Die vorliegend stempelförmigen Aufnahmestrukturen 32 sind bei diesem Ausführungsbeispiel in einer jeweils anderen Vertiefung 78 der Greifeinheit 24 verlagerbar gehalten. Vorliegend umfasst die Greifeinheit 24 einen Grundkörper 86 mit darin ausgebildeten Ausnehmungen. An dem Grundkörper 86 sind mehrere Pneumatikzylinder 88 befestigt. Die Ausnehmungen und die Pneumatikzylinder 88 bilden gemeinsam die Vertiefungen 78.

Zwischen den Aufnahmestrukturen 32 und der Greifeinheit 24 ist eine jeweils andere Federeinheit 74 vorgespannt gehalten. Die Federeinheiten 74 sind vorliegend als Schraubenfedern 74 ausgebildet. Die Aufnahmestrukturen 32 sind entgegen der durch die Federeinheiten 74 bereitgestellten Rückstellkräfte in eine senkrecht zu der Halteebene ausgerichtete erste Richtung 76 verlagerbar.

Werden die Haftanordnung 25 und die Deckschicht 16 aneinandergedrückt, so wird durch die Federeinheiten 74 die Andrückkraft begrenzt. Dies hat zur Folge, dass ein Überdrücken der Haftelemente 26 vermieden wird.

Vorliegend umfasst die Greifeinheit 24 eine Aktuatoreinrichtung 80 mit mehreren Aktuatoren 82, die bei dem dargestellten Ausführungsbeispiel als Pneumatikaktuatoren 82 ausgebildet sind. Die Aktuatoren 82 sind ausgebildet, um die Aufnahmestrukturen 32 derart weit in die erste Richtung 76 zu verlagern, dass die Haftelemente 26 in den Vertiefungen 78 angeordnet sind. Eine solche Anordnung der Haftelemente 26 ist in Figur 9 gezeigt. Werden die Haftelemente 26 in die Vertiefungen 78 verlagert, so wird die Deckschicht 16 durch eine Basisfläche 84 der Greifeinheit 24 bzw. des Grundkörpers 86 zurückgehalten, von der die Vertiefungen 78 ausgehen. Vorzugsweise werden die Haftelemente 26 durch die Aktuatoren 82 nacheinander oder paarweise in die Vertiefungen 78 verlagert.

Bei dem in Figur 10 dargestellten Ausführungsbeispiel der Greifeinheit 24 ist die Haftanordnung 25 durch ein einzelnes Haftelement 26 gebildet. Das Haftelement 26 ist bei dem dargestellten Ausführungsbeispiel U-förmig ausgebildet.

Die Haftanordnung 25 ist derart mit der Deckschicht 16 in Berührkontakt gebracht, dass der Abstand zwischen den Ecken der Deckschicht 16 und der Haftanordnung 25 kleiner als 40 mm ist. Auch durch eine solche Anordnung der Haftanordnung 25 an der Deckschicht 16 kann ein Herunterhängen der Kanten der Deckschicht 16 beim Abheben sicher vermieden werden.

Bei dem in Figur 10 dargestellten Ausführungsbeispiel der Greifeinheit 24 wird eine erfasste Deckschicht beispielsweise durch den in den Figuren 4 und 5 gezeigten Rückhalter 44 abgelöst. Zudem können auch ein oder mehrere verlagerbare Abdrückstempel 60 als Teil der Greifeinheit 24 vorhanden sein.

Bei einem weiteren Ausführungsbeispiel des Verfahrens wird die erfasste Deckschicht 16 durch ruckartiges Bewegen der Greifeinheit 24 von der Greifeinheit 24 abgelöst. Es werden also die Massenträgheit und der Luftwiderstand der Deckschicht 16 zum Ablösen genutzt. Dies hat den Vorteil, dass zum Ablösen weder ein ortsfester Rückhalter noch eine spezielle Ausführung der Greifeinheit erforderlich ist.

## Patentansprüche

1. Handhabungssystem (10) für einen Reinraum (64), umfassend
wenigstens einen wannenförmigen Transportbehälter (12), insbesondere Tub (12), mit darin angeordneten pharmazeutischen Primärverpackungselementen (14), insbesondere Behältnisse (14) oder Verschlusselemente, wobei die Primärverpackungselemente (14) von einer Deckschicht (16), insbesondere Deckfolie (16), bedeckt sind, und eine Vorrichtung (22) zum Abheben der Deckschicht (16) von den Primärverpackungselementen (14), wobei die Vorrichtung (22) eine Greifeinheit (24) zum Erfassen der Deckschicht (16) umfasst, **dadurch gekennzeichnet, dass**
die Greifeinheit (24) eine Haftanordnung (25) umfasst, die durch wenigstens ein Haftelement (26) gebildet ist, wobei das Haftelement (26) zum adhäsiven Erfassen der Deckschicht (16) haftstrukturiert ausgebildet ist, dass
die Haftanordnung (25) mit einer von den Primärverpackungselementen (14) abgewandten ersten Seite (36) der Deckschicht (16) in flächigen Berührkontakt bringbar ist, und dass
der Durchmesser des kleinsten Kreises, der in einer Halteebene der Haftanordnung (25) liegt und die Haftanordnung (25) umschließt, wenigstens 50 mm beträgt.

2. Handhabungssystem (10) nach Anspruch 1, **dadurch gekennzeichnet, dass** die Deckschicht (16) mehrere Ecken aufweist, und dass die Haftanordnung (25) derart mit der ersten Seite (36) der Deckschicht (16) in Berührkontakt bringbar ist, dass der Abstand zwischen den Ecken der Deckschicht (16) und der Haftanordnung (25) kleiner als 40 mm ist.

3. Handhabungssystem (10) nach einem der vorhergehenden Ansprüche, **dadurch gekennzeichnet, dass** die Deckschicht (16) mehrere Kanten aufweist, und dass die Haftanordnung (25) derart mit der ersten Seite (36) der Deckschicht (16) in Berührkontakt bringbar ist, dass der Abstand zwischen den Kantenmitten der Kanten und der Haftanordnung (25) kleiner als 40 mm ist.

4. Handhabungssystem (10) nach einem der vorhergehenden Ansprüche, **dadurch gekennzeichnet, dass** das Haftelement (26) als Haftfolie (26) ausgebildet ist.

5. Handhabungssystem (10) nach einem der vorhergehenden Ansprüche, **dadurch gekennzeichnet, dass** die Haftanordnung (25) ein Haftelement (26) aufweist, das X-förmig, C-förmig, U-förmig oder ringförmig, insbesondere kreisringförmig oder rechteckringförmig, ausgebildet ist.

6. Handhabungssystem (10) nach einem der vorhergehenden Ansprüche, **dadurch gekennzeichnet, dass** die Haftanordnung (25) mehrere Haftelemente (26) umfasst, bevorzugt wenigstens drei Haftelemente (26), bevorzugt wenigstens vier Haftelemente (26), besonders bevorzugt vier Haftelemente (26), die an einer jeweils anderen Ecke eines gedachten Parallelogramms angeordnet sind.

7. Handhabungssystem (10) nach Anspruch 6, **dadurch gekennzeichnet, dass** die Primärverpackungselemente (14) eine der Deckschicht (16) zugewandte erste Endseite (17) umfassen, und dass die mehreren Haftelemente (26) mit der ersten Seite (36) der Deckschicht (16) derart in Berührkontakt bringbar sind, dass jedes der Haftelemente (26) bezogen auf eine senkrecht zu der Halteebene ausgerichtete Blickrichtung (38) mit jeweils wenigstens einer ersten Endseite (17) eines direkt unterhalb der Deckschicht (16) angeordneten Primärverpackungselements (14) wenigstens bereichsweise zur Deckung gebracht ist.

8. Handhabungssystem (10) nach einem der Ansprüche 6 und 7, **dadurch gekennzeichnet, dass** die Greifeinheit (24) mehrere insbesondere säulenförmige oder stempelförmige Aufnahmestrukturen (32) umfasst, und dass die Haftelemente (26) an Endseiten (34) der Aufnahmestrukturen (32) angeordnet sind.

9. Handhabungssystem (10) nach Anspruch 8, **dadurch gekennzeichnet, dass** die Aufnahmestrukturen (32) an einem jeweils anderen parallel oder schräg zu der Halteebene erstreckten Ausleger (30) der Greifeinheit (24) angeordnet sind.

10. Handhabungssystem (10) nach einem der Ansprüche 8 und 9, **dadurch gekennzeichnet, dass** zwischen den Aufnahmestrukturen (32) und der Greifeinheit (24) eine jeweils andere Federeinheit (74) gehalten ist, wobei die Aufnahmestrukturen (32) durch die Federeinheiten (74) jeweils mit einer Rückstellkraft beaufschlagt werden, und wobei die Aufnahmestrukturen (32) entgegen der jeweiligen Rückstellkraft in eine senkrecht zu der Halteebene ausgerichtete erste Richtung (76) verlagerbar sind.

11. Handhabungssystem (10) nach Anspruch 10, **dadurch gekennzeichnet, dass** die Aufnahmestrukturen (32) in einer jeweils anderen Vertiefung (78) der Greifeinheit (24) verlagerbar gehalten sind, dass die Greifeinheit (24) eine Aktuatoreinrichtung (80) mit wenigstens einem Aktuator (82) umfasst, und dass die Aktuatoreinrichtung (80) ausgebildet ist, um die Aufnahmestrukturen (32) zum Ablösen einer erfassten Deckschicht (16) derart weit in die erste Richtung (76) zu verlagern, dass die Haftelemente (26) in den Vertiefungen (78) angeordnet sind.

12. Handhabungseinrichtung (10) nach Anspruch 11, **dadurch gekennzeichnet, dass** jeder Aufnahmestruktur (32) ein jeweils anderer Aktuator (82) zugeordnet ist.

13. Handhabungssystem (10) nach einem der vorhergehenden Ansprüche, **gekennzeichnet durch**
eine Handhabungseinrichtung (40), die ausgebildet ist, um die Greifeinheit (24) an die Deckschicht (16) heranzubewegen und die Haftanordnung (25) an die erste Seite (36) der Deckschicht (16) anzudrücken, und/oder durch
eine Handhabungseinrichtung, die ausgebildet ist, um den Transportbehälter (12) mit der Deckschicht (16) an die Haftanordnung (25) heranzubewegen und die erste Seite (36) der Deckschicht (16) an die Haftanordnung (25) anzudrücken.

14. Handhabungssystem (10) nach einem der vorhergehenden Ansprüche, **dadurch gekennzeichnet, dass** die Greifeinheit (24) wenigstens einen Abdrückstempel (60) umfasst, der zum Ablösen einer erfassten Deckschicht (16) gegen die erste Seite (36) der Deckschicht (16) drückbar ist.

15. Handhabungssystem (10) nach einem der vorhergehenden Ansprüche, **dadurch gekennzeichnet, dass** die Greifeinheit (24) wenigstens zwei zueinander verlagerbare Abschnitte (54, 55) umfasst, wobei die Abschnitte (54, 55) ein jeweils anderes Haftelement (26) oder eine jeweils andere Gruppe von Haftelementen (26) tragen, wobei ein Aktuator (58) zum Verlagern der Abschnitte (54, 55) zueinander vorhanden ist, und wobei eine erfasste Deckschicht (16) durch Verlagern der Abschnitte (54, 55) zueinander von der Greifeinheit (24) ablösbar ist.

16. Handhabungssystem (10) nach einem der vorhergehenden Ansprüche, **gekennzeichnet durch** wenigstens einen ortsfesten Rückhalter (44), wobei der Rückhalter (44) derart ausgebildet und angeordnet ist, dass er an der ersten Seite (36) einer erfassten Deckschicht (16) zur Anlage bringbar ist, und wobei die erfasste Deckschicht (16) bei an der ersten Seite (36) zur Anlage gebrachtem Rückhalter (44) durch Bewegen der Greifeinheit (24) in eine von der Deckschicht (16) weggerichtete Richtung von der Greifeinheit (24) ablösbar ist, insbesondere wobei der Rückhalter (44) spatelförmig ausgebildet ist.

17. Handhabungssystem (10) nach Anspruch 16, **dadurch gekennzeichnet, dass** unterhalb des Rückhalters (44) eine Rutscheinheit (46) mit einer Rutschfläche (48) angeordnet ist, wobei die Rutschfläche (48) oder eine gedachte Verlängerung der Rutschfläche (48) in Rutschrichtung durch eine Auffangöffnung (52) eines Auffangbehälters (50) für Deckschichten (16) verläuft.

18. Handhabungssystem (10) nach einem der vorhergehenden Ansprüche, **gekennzeichnet durch** wenigstens eine Sensoreinheit, insbesondere Strahlungssensor oder Kraftsensor, die ausgebildet ist, um eine durch die Greifeinheit (24) erfasste Deckschicht (16) zu erkennen.

19. Reinraum (64), in dem ein Handhabungssystem (10) nach einem der Ansprüche 1 bis 18 angeordnet ist, insbesondere als Teil einer pharmazeutischen Produktionsmaschine.

20. Verfahren zum Abheben von Deckschichten (16), umfassend:
a. Bereitstellen eines wannenförmigen Transportbehälters (12), insbesondere Tub (12), mit darin angeordneten pharmazeutischen Primärverpackungselementen (14), insbesondere Behältnisse (14) oder Verschlusselemente, wobei die Primärverpackungselemente (14) von einer Deckschicht (16), insbesondere Deckfolie (16), bedeckt sind,
b. Bereitstellen einer Vorrichtung (22) mit einer Greifeinheit (24), die eine Haftanordnung (25) umfasst, die durch wenigstens ein Haftelement (26) gebildet ist, wobei das Haftelement (26) zum adhäsiven Erfassen der Deckschicht (16) haftstrukturiert ausgebildet ist, und wobei der Durchmesser des kleinsten Kreises, der in einer Halteebene der Haftanordnung (25) liegt und die Haftanordnung (25) umschließt, wenigstens 50 mm beträgt,
c. Aneinanderdrücken der Haftanordnung (25) und der Deckschicht (16), wobei die Haftanordnung (25) mit einer von den Primärverpackungselementen (14) abgewandten ersten Seite (36) der Deckschicht (16) in flächigen Berührkontakt gebracht wird, und wobei die Deckschicht (16) durch die Haftanordnung (25) adhäsiv erfasst wird,
d. Abheben der erfassten Deckschicht (16) von den Primärverpackungselementen (14),
e. Ablösen der abgehobenen Deckschicht (16) von der Greifeinheit (24).

21. Verfahren nach Anspruch 20, **dadurch gekennzeichnet, dass** die Deckschicht (16) durch ruckartiges Bewegen der Greifeinheit (24), durch einen ortsfesten Rückhalter (44), durch Verlagern von Haftelementen (26) zueinander, durch Verlagern von Haftelementen (26) in Vertiefungen (78) der Greifeinheit (24) oder durch wenigstens einen an der Greifeinheit (24) verlagerbar gehaltenen Abdrückstempel (60) von der Greifeinheit (24) abgelöst wird.
